# EUROPÄISCHE PATENTSCHRIFT

(11) **EP 2 080 685 B1**
(45) Veröffentlichungstag und Bekanntmachung des Hinweises auf die Patenterteilung: **27.04.2011**
(21) Anmeldenummer: 09150443.1
(22) Anmeldetag: 13.01.2009
(51) Int. Cl.: B62D 1/16, G01L 5/22

(54) **Drehmomentsensierung mittels integrierter Dehnungsmessstreifen**
Rotational torque sensing by means of integrated strain gauge
Détection du couple à l'aide de gauge de contrainte

(30) Priorität: 16.01.2008 DE 102008004737; 14.03.2008 DE 102008014206
(43) Veröffentlichungstag der Anmeldung: 22.07.2009
(73) Patentinhaber: Ford Global Technologies, LLC, Dearborn, MI 48126 (US)
(72) Erfinder: Keller, Jens, 42655, Solingen (DE); Wolff, Marco, 50226 Frechen (DE)
(74) Vertreter: Bauer Vorberg Kayser Patentanwälte

(56) Entgegenhaltungen:
- EP-A- 0 410 133
- US-A- 4 629 024

## Beschreibung

Die vorliegende Erfindung betrifft ein Lenksystem für ein Kraftfahrzeug, das eine Lenkeingangswelle und ein Dehnungsmessstreifenprinzip aufweist.

Fahrzeuglenksysteme umfassen ein von einem Fahrer bedienbares Lenkrad, welches das aufgebrachte Lenkdrehmoment über eine Lenksäule und ein Getriebe in eine Achse mit lenkbaren Rädern einleitet. Zur Reduzierung der Lenkradkräfte beim Lenken im Stand, beim Rangieren oder bei geringen Fahrgeschwindigkeiten verfügen viele Fahrzeuge über eine Lenkunterstützung, eine so genannte Servolenkung.

Dabei kommen in Fahrzeugen meist manuelle-, hydraulische-, elektrohydraulische-, verstärkt aber auch elektromechanische Lenksysteme zum Einsatz. Durch einen direkten Eingriff in die jeweilige Elektronik und Informationsverarbeitung des Fahrzeugs kann das Lenkgefühl an den entsprechenden Fahrzeugtyp und die jeweilige Fahrsituation angepasst werden. Das vom Fahrer aufgebrachte Drehmoment ist dabei stets die elementare zu erfassende Größe. Unabhängig vom physikalischen Prinzip der Lenkunterstützung, muss die eigentliche Unterstützung immer in Abhängigkeit vom aufgebrachten Drehmoment stehen, wenn ein realistisches Fahrgefühl im Vordergrund steht.

Wird bei der hydraulischen Lenkung der Betrag der Unterstützung durch das mechanisch arbeitende Drehschieberventil bereitgestellt, so ist bei der Unterstützung durch einen elektrischen Aktuator immer eine Wandlung des Drehmomentes in ein elektrisches Signal erforderlich.

Beispiele für solche elektromechanisch unterstützenden Lenksysteme sind:
- Single-/double pinion EPAS
- Centric-/concentric rack EPAS
- Column EPAS

Elektromechanische Lenksysteme finden überwiegend bei Kleinwagen bzw. im Mittelklassesegment Anwendung, da die durch das 12V Bordnetz bereitgestellte Leistung begrenzt ist und somit Fahrzeugklassen mit hohen Achslasten nicht bzw. schlecht bedient werden können. Aus diesem Grund wird aktuell an Systemen gearbeitet, die hydraulisch arbeiten, bei denen jedoch das Lenkventil durch ein elektrisch arbeitendes Ventil ersetzt wird. Somit sind hohe Achslasten zu bewältigen ohne auf die EPAS typischen Funktionalitäten verzichten zu müssen. Auch hier ist es unumgänglich das vom Fahrer aufgebrachte Drehmoment in ein elektrisches Signal zu wandeln.

Beispiele hierfür sind:
- Elektronik-valve System (E-valve)
- Closed-center System

Unabhängig vom physikalischen Prinzip der jeweiligen Lenkunterstützung wird das Lenkdrehmoment als Messwert benötigt, um eine angemessene Lenkunterstützung für den Fahrzeugführer mit Hilfe eines Aktuators, zum Beispiel einem Elektromotor, erzeugen zu können. Entsprechend ist es notwendig, das vom Fahrzeugführer aufgebrachte Drehmoment zu erfassen und in ein elektrisches Signal umzuwandeln. Dem Fachmann sind derzeit verschiedene Drehmomentsensoren bekannt, mit denen jeweils das erzeugte Lenkdrehmoment ermittelt werden kann.

Zu diesen gehören beispielsweise:
- magnetoelastische Sensoren, die den Effekt ausnutzen, dass sich bei einer Änderungen eines Magnetfeldes eine Widerstandsänderung ergibt,
- induktive Sensoren, die auf den physikalischen Gesetzen des Elektromagnetismus beruhen, aber nicht wie oben zwei oder mehrere Spulen besitzen, sondern nur eine Spule,
- Hall-Sensoren, die den Hall-Effekt zur Messung von Magnetfeldern und -strömen zur Lageerfassung nutzen, oder
- potentiometrische Sensoren, die passive auf einem Potentiometer basierende Sensoren sind und mit dessen Hilfe sich die physikalischen Größen Länge und Winkel als analoge elektrische Größen wie Spannung oder Strom darstellen.

Aus der US 4,629,024 ist ein Lenksystem bekannt, in dem zwischen dem Lenkgetriebe und der Lenksäule ein tordierbares Element aus einem nachgiebigen Material angeordnet ist. Bei einer Drehmomentbeaufschlagung der fahrerseitigen Lenksäule gegen das Lenkgetriebe stellt sich an dem tordierbaren Element ein Verdrehwinkel ein, der gemessen wird und aus dem die notwendige Lenkkraftunterstützung ermittelt wird. Zum Messen des Verdrehmomentes kann neben weiteren vorgeschlagenen Sensoren auch ein induktiver Sensor verwendet werden.

Nachteilig bei allen derzeit bekannten Systemen ist, dass sie einen mit einer definierten Steifigkeit ausgelegten Torsionsstab aufweisen müssen, über dessen Verdrehwinkel das anliegende Lenkdrehmoment, wie bei der hydraulisch arbeitenden Lenkung, ermittelt und die Wandlung in ein elektrisches Signal ermöglicht wird. Ein solcher Torsionsstab wird mit einer definierten Steifigkeit ausgelegt, so dass dessen Verdrehwinkel ein Maß für das anliegende Drehmoment darstellt. Diese in der Relativverdrehung enthaltene Information machen sich die oben beschriebenen Prinzipien zu nutze, um die Wandlung in ein elektrisches Signal zu realisieren. Die Integration des Torsionsstabes in die Lenkungs-assembly stellt zudem einen zusätzlichen Design- und Fertigungsaufwand dar.

Aus der US 4,629,024 ist auch die Verwendung von Dehnungsmessstreifen zur Ermittlung von Drehmomenten in einem Lenksystem bekannt. Das Grundprinzip eines Dehnungsmessstreifens basiert auf einer elektrischen Widerstandsänderung eines Leiters, wobei sich der elektrische Widerstand des im Sensor befindlichen Messgitters bei einer Deformation in Messrichtung ändert. Die Ursache der Deformation kann beilspielsweise durch eine Kraft-, Druck- oder Drehmomentänderung auftreten. Bei den gegenwärtigen Herstellungsverfahren von Dehnungsmessstreifen wird eine Leiterstruktur aus einer auf einem Trägerfilm aufgebrachten Metallfolie herausgeätzt. Anschließend wird diese Trägerfolie mittels eines speziellen Klebers auf dem zu überwachenden Bauteil angebracht. Die Herstellung und auch das Anbringen des Dehnungsmessstreifens ist aufwändig und bereitet oftmals Schwierigkeiten. Dies insbesondere dann, wenn das zu überwachende Bauteil aus einem elektrisch leitenden Material besteht, da dann zwischen dem Dehnungsmessstreifen und dem Prüfgegenstand eine elektrisch isolierende Schicht vorgesehen sein muss.

Aus der DE 33 21 198 C1 ist eine Sicherheitslenksäule aus faserverstärkten Kunststoffen bekannt. Die Sicherheitslenksäule ist bei einer Drehmomentbeanspruchung verhältnismäßig steif, bei einer längs wirkenden Kraft im Falle eines Frontalaufpralls kann sie sich jedoch zusammenstauchen, damit sie das Lenkrad nicht in den Fahrgastraum schiebt.

Die EP 0 410 133 A2 beschreibt eine Vorrichtung zur Erfassung des in einer Welle übertragenen Drehmoments, insbesondere bei einer zwischen einem Prüfling und einer Prüfmaschine angeordneten Welle. Auf diese Welle aus einem Faser-Matrix-Kunststoff ist ein Dehnungsmessstreifensystem angeordnet, dessen Werte nach außen zu einer ortsfesten Messwerteverarbeitung übertragen werden können. Das Anbringen der Dehnungsmessstreifen bzw. Integration in die Vorrichtung ist aufwendig und muss sehr sorgfältig erfolgen. Über die Lebensdauer der Welle besteht die Gefahr des Löslösens des Dehnungsmessstreifensystems.

Der vorliegenden Erfindung liegt die Aufgabe zugrunde, ein elektromechanisches Lenksystem zur Verfügung zu stellen, bei dem eine zuverlässige Ermittlung des Lenkdrehmomentes ohne die Verwendung eines Torsionsstabes möglich ist. Das Lenksystem soll möglichst unkompliziert, einfach, verschleißfrei und kostengünstig aufgebaut und herstellbar sein.

Erfindungsgemäß wird die Aufgabe durch ein elektromechanisches Lenksystem für ein Kraftfahrzeug gemäß den Merkmalen des Anspruchs 1 gelöst.

Die Erfindung basiert auf der Erkenntnis, dass dann, wenn das Lenksystem zumindest ein Bauteil aufweist, das nicht aus einem Metall oder einer Metalllegierung, sondern aus einem Faserverbundkunststoff besteht, eine direkte Integration eines Dehnungsmessstreifens bzw. eines metallischen Leiters oder eines gesamten Messgitters in das entsprechende Bauteil möglich ist. Die Integration ist dabei so zu verstehen, dass der Dehnungsmessstreifen bzw. das sensierende Messgitter (oder der entsprechende sensierende Leiter) unmittelbar zwischen die einzelnen Faserlagen gebracht wird, und dessen Enden anschlussfertig aus dem Faserverbund-Bauteil herausgeführt werden.

Als potentiell geeignete Bauteile kommen sämtliche Bauteile in Betracht, die durch das vom Fahrer aufgebrachte Lenkmoment tordiert werden. Die Integration kann also vorzugsweise in eine Lenkeingangswelle, eine Verlängerungswelle (auch Extension-shaft), die Lenksäule selbst oder zumindest Komponenten der Lenksäule erfolgen.

Das den Dehnungsmessstreifen beinhaltende Bauteil übernimmt die Funktion eines Drehmomentsensors ohne seine ursprüngliche Funktion, nämlich das Übertragen des vom Fahrer eingebrachten Lenkmomentes, einzubüßen.

Der Dehnungsmessstreifen kann auf unterschiedliche Art und Weise in den Faserverbundkunststoff integriert werden, so dass durch den entstehenden Widerstand entweder eine Wheatstone'sche ¼ -Messbrücke oder eine Wheatstone'sche ½ -Messbrücke oder eine Vollbrücke ausgebildet werden kann.

Vorzugsweise besteht der Faserverbundkunststoff aus Glasfasern, Kohlenstofffasern oder Aramidfasern. Diese Faserverbundkunststoffe zeichnen sich in der Regel durch hohe Festigkeit und einen hohen Elastizitätsmodul aus. Darüber hinaus sind sie alterungs- und witterungsbeständig, sowie hitze- und feuerbeständig.

Der Dehnungsmessstreifen kann ausschließlich aus elektrisch leitendem Material gefertigt bzw. an keiner Stelle elektrisch isoliert sein, er kann aber auch gegenüber dem Bauteil, an oder in dem er angebracht ist, durch nichtleitendenes Material isoliert sein. Über aus dem Faserverbundkunststoff herausragende Anschlüsse kann der Dehnungsmessstreifen von außen kontaktiert werden.

Eine Möglichkeit der elektrischen Kontaktierung kann bevorzugt ein Abgriff über einen Schleifring sein. Auf diese Weise wird der im Faserverbundkunststoff integrierte Dehnungsmessstreifen zum einen mit einer ausreichenden Betriebsspannung versorgt und zum anderen kann über den Schleifring auch das eigentliche Messsignal abgegriffen werden. Dabei wird mittels eines Schleifringabgriffs, beispielsweise Bürsten, der Schleifring kontaktiert und dadurch die Energieversorgung und die Abnahme des Messsignals gewährleistet. Denkbar ist auch eine feste Verdrahtung des Dehnungsmessstreifens, wodurch ebenfalls eine Versorgung des Dehnungsmessstreifens mit ausreichender Betriebsspannung und ein Abgriff des Messsignals gewährleistet werden kann. Eine derartige Verdrahtung kann beispielsweise über eine Wickelfeder erfolgen. In einer besonders vorteilhaften Ausführung erfolgt eine kontaktlose Übertragung der Messwerte, zum Beispiel über Funk, BlueTooth oder ähnliche Übertragungssysteme.

Erfindungsgemäß ist der Dehnungsmessstreifen bzw. der Schleifring, die Wickelfeder oder der Funkempfänger mit einem Steuergerät verbindbar. Das Steuergerät kann das vom Dehnungsmessstreifen ermittelte Lenkdrehmoment verarbeiten und mittels eines elektrischen Aktuators den Lenkprozess unterstützen. Denkbar ist auch ein Sicherheitsvergleich mit einer bereits festgelegten eingegebenen oder berechneten Sollgröße.

Vorzugsweise ist in das Steuergerät ein Brückenverstärker integriert. Der integrierte Brückenverstärker kann sowohl die Bereitstellung der notwendigen Versorgungsspannung als auch die Verstärkung des Messsignals übernehmen. Dabei kann das Signal abhängig von der gewünschten Verstärkung wahlweise im Bereich 0V - 5V bzw. 0V - 10V bereitgestellt werden. Anschließend kann das Signal analog oder digital umgewandelt und das entsprechende Drehmoment skaliert werden. Wenn das Lenksystem nicht verwendet wird, liegt somit die Ausgangsspannung des Brückenverstärkers bei 0V. Bei einer Lenkbewegung des Fahrzeugführers wird die Lenkeinganswelle tordiert, wodurch eine Widerstandsänderung innerhalb des Dehnungsmessstreifens erfolgt. Die abgegriffene Spannung ändert sich analog, abhängig vom Betrag und Richtung des aufgebrachten Drehmomentes.

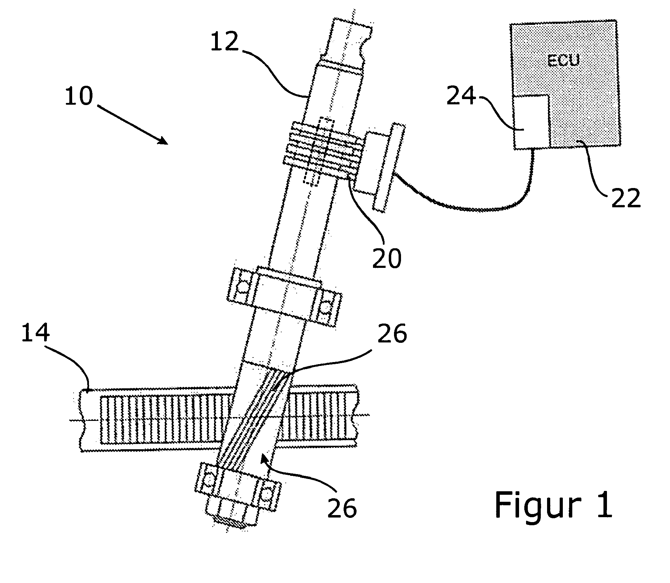

Nachfolgend wird die Erfindung unter Bezugnahme auf die beiliegende Zeichnung näher beschrieben. Dabei zeigt die einzige Figur 1 eine schematische Darstellung eines erfindungsgemäßen elektromechanischen Lenksystems für ein Kraftfahrzeug.

Figur 1 veranschaulicht ein erfindungsgemäßes Lenksystem 10 eines Kraftfahrzeugs. Das Lenksystem 10 weist als Verbindung zu einer Lenksäule eine Lenkeingangswelle 12 auf. Die Lenkeingangswelle 12 ist mit ihrem oberen Ende mit der nicht dargestellten Lenksäule verbunden und greift mit ihrem unteren Ende über ein Antriebsritzel 26 in eine Zahnstange 14, so dass die Drehung des nicht dargestellten Lenkrades die Drehbewegung über die Lenkeinganswelle 12 und das Antriebsritzel 26 auf die Zahnstange 14 übertragen wird.

Erfindungsgemäß besteht mindestens ein Bereich des Lenksystems 10 zumindest teilweise aus einem Faserverbundkunststoff. Im dargestellten Ausführungsbeispiel ist der Dehnungsmessstreifen in die Lenkeinganswelle 12 integriert. Dabei kann der Dehnungsmessstreifen auf unterschiedliche Art und Weise in den Faserverbundkunststoff integriert werden, so dass der entstehende Widerstand entweder eine Wheatstone'schen ¼ -Messbrücke oder einer Wheatstone'schen ½ -Messbrücke oder einer Vollbrücke ausbilden kann.

Die Lenkeinganswelle 12 ist von mehreren Schleifringen 18 umschlossen, deren Abgriff über Bürsten 20 erfolgt und die eine Kontaktierung des im Faserverbundkunststoff integrierten Dehnungsmessstreifens ermöglichen. Die Bereitstellung der notwendigen Versorgungsspannung wird über ein Steuergerät 22 gewährleistet. Ferner erfolgt eine Verstärkung des abgegriffenen Messsignals über einen im Steuergerät 22 integrierten Messbrückenverstärker 24.

Die Erfindung weist eine Vielzahl an Vorteilen auf. Durch den Wegfall des Torsionsstabes und durch die Schaffung eines Multifunktionsbauteils wird das Gesamtgewicht des Lenksystems reduziert und die Lenkeingangswelle 12 und das Lenkritzel können als einzelnes Bauteil konstruiert werden. Weiterhin fällt der Montageprozess für die Lenkeingangswelle, den Torsionsstab und das Lenkritzel weg und es ergibt sich eine der erhöhte Steifigkeit des Lenksystems durch den Wegfall des Torsionsstabes. Auf sogenannte Safety-Flats kann ebenfalls verzichtet werden.

Die Zeichnung offenbart und beschreibt eine exemplarische Ausführung der vorliegenden Erfindung, andere mechanische Anordnungen sind ebenfalls möglich. Die Erfindung ist nicht auf das beschriebene Ausführungsbeispiel beschränkt, es dient lediglich der Verdeutlichung der Erfindung.

Mit einem Lenkungsturm ist ein in Richtung der Lenksäule emporragender Gehäuseabschnitt gemeint. In konventionellen hydraulischen Servolenkungen sind in dem Lenkungsturm üblicherweise der Torsionsstab und das Lenkventil angeordnet.

## Patentansprüche

1. Lenksystem (10) für ein Kraftfahrzeug, mit einem Dehnungsmessstreifen für die Messung eines Lenkdrehmomentes, **dadurch gekennzeichnet, dass** zumindest ein Bauteil des Lenksystems (10) aus einem Faserverbundstoff gefertigt ist und der Dehnungsmessstreifen zwischen einzelnen Faserlagen des Faserverbundstoffs angeordnet ist und seine Enden anschlussfertig aus dem Faserverbundstoff herausragen.

2. Lenksystem (10) nach Anspruch 1, **dadurch gekennzeichnet, dass** der Dehnungsmessstreifen in eine Lenkeingangswelle (12) integriert ist.

3. Lenksystem (10) nach Anspruch 1, **dadurch gekennzeichnet, dass** der Dehnungsmessstreifen in eine Verlängerungsachse integriert ist.

4. Lenksystem (10) nach Anspruch 1, **dadurch gekennzeichnet, dass** der Dehnungsmessstreifen in ein Bauteil der Lenksäule integriert ist.

5. Lenksystem (10), nach einem der Ansprüche 1 bis 4, **dadurch gekennzeichnet, dass** der Faserverbundkunststoff Fasern aus der Gruppe Glasfasern, Kohlenstofffasern oder Aramidfasern aufweist.

6. Lenksystem (10), nach einem der Ansprüche 1 bis 5, **dadurch gekennzeichnet, dass** eine elektrische Kontaktierung des Dehnungsmessstreifens über mindestens einen Schleifring (18) erfolgt, der den Dehnungsmessstreifen mit Betriebsspannung versorgt und über den ein Messsignal abgreifbar ist.

7. Lenksystem (10), nach Anspruch 6, **dadurch gekennzeichnet, dass** ein Schleifringabgriff über Bürsten (20) erfolgt, die in einem Lenkungsturm angeordnet sind.

8. Lenksystem (10), nach einem der Ansprüche 1 bis 5, **dadurch gekennzeichnet, dass** der Abgriff des Messsignals mit einer fest verdrahteten Wickelfeder erfolgt.

9. Lenksystem (10), nach einem der Ansprüche 1 bis 5, **dadurch gekennzeichnet, dass** der Abgriff des Messsignals kontaktlos erfolgt.

10. Lenksystem (10), nach einem der Ansprüche 1 bis 8, **dadurch gekennzeichnet, dass** die Bereitstellung der Versorgungsspannung sowie eine Verstärkung des Messsignals durch einen Verstärker (24) erfolgt, der in Steuergerät (22) integriert ist.

11. Lenksystem (10) nach Anspruch 9, **dadurch gekennzeichnet, dass** das Messsignal dem Steuergerät (22) in Abhängigkeit der gewählten Verstärkung im Bereich 0V-5V oder 0V-10V bereitgestellt wird, um nach einer analog/digital-Wandlung auf das entsprechende Drehmoment skaliert zu werden.

12. Lenksystem (10) nach Anspruch 9 oder 10, **dadurch gekennzeichnet, dass** der Verstärker als Messbrückenverstärker (24) ausgeführt ist.

## Claims

1. Steering system (10) for a motor vehicle, comprising a strain gauge for measuring a steering torque, **characterised In that** at least one component of the steering system (10) Is fabricated from a fibrous composite material and the strain gauge Is disposed between individual fibre layers of the fibrous composite material and its ends protrude, ready for connection, from the fibrous composite material.

2. Steering system (10) according to claim 1, **characterised in that** the strain gauge is Integrated In a steering input shaft (12).

3. Steering system (10) according to claim 1, **characterised in that** the strain gauge Is Integrated In an extension shaft.

4. Steering system (10) according to claim 1, **characterised In that** the strain gauge is integrated in a component of the steering column.

5. Steering system (10) according to any one of the claims 1 to 4, **characterised In that** the fibrous composite plastic material comprises fibres from the group glass fibres, carbon fibres or aramid fibres.

6. Steering system (10) according to any one of the claims 1 to 5, **characterised In that** an electrical contact of the strain gauge is established through at least one slip ring (18) which supplies the strain gauge with operating voltage and through which a measurement signal can be tapped.

7. Steering system (10) according to claim 6, **characterised In that** the slip ring Is tapped through brushes (20) disposed in a steering tower.

8. Steering system (10) according to any one of the claims 1 to 5, **characterised In that** the measurement signal is tapped by means of a firmly wired coil spring.

9. Steering system (10) according to any one of the claims 1 to 5, **characterised in that** the measurement signal is tapped without contact.

10. Steering system (10) according to any one of the claims 1 to 8, **characterised in that** the supply voltage is provided and the measurement signal amplified by an amplifier (24) Integrated In a control device (22).

11. Steering system (10) according to claim 9, **characterised in that** the measurement signal is provided to the control device (22) depending on the selected amplification In the range of from 0V-5V or 0V-10V, In order to be scaled to the corresponding torque following an analogue/digital conversion.

12. Steering system (10) according to claim 9 or 10, **characterised in that** the amplifier is configured as a measurement bridge amplifier (24).

## Revendications

1. Système de direction (10) pour un véhicule automobile, comprenant une jauge extensométrique pour la mesure d'un couple de direction, **caractérisé par le fait qu'**au moins un composant dudit système de direction (10) est réalisé dans un matériau composite fibreux et que ladite jauge extensométrique est disposée entre des couches fibreuses individuelles du matériau composite fibreux et que ses extrémités font saillie hors du matériau composite fibreux d'une manière prête à être connectées.

2. Système de direction (10) selon la revendication 1, **caractérisé par le fait que** ladite jauge extensométrique est intégrée à un arbre d'entrée de direction (12).

3. Système de direction (10) selon la revendication 1, **caractérisé par le fait que** ladite jauge extensométrique est Intégrée à un axe de rallonge.

4. Système de direction (10) selon la revendication 1, **caractérisé par le fait que** ladite jauge extensométrique est intégrée à un composant de la colonne de direction.

5. Système de direction (10) selon l'une quelconque des revendications 1 à 4, **caractérisé par le fait que** ledit matériau composite fibreux présente des fibres du groupe comprenant les fibres de verre, les fibres de carbone ou les fibres aramide.

6. Système de direction (10) selon l'une quelconque des revendications 1 à 5, **caractérisé par le fait que** l'établissement d'un contact électrique de ladite jauge extensométrique est réalisé via au moins une bague collectrice (18) qui alimente la jauge extensométrique en tension de service et par laquelle peut être prélevé un signal de mesure.

7. Système de direction (10) selon la revendication 6, **caractérisé par le fait qu'**un prélèvement sur bague collectrice se fait au moyen de balais (20) qui sont agencés dans une tour de direction.

8. Système de direction (10) selon l'une quelconque des revendications 1 à 5, **caractérisé par le fait que** le prélèvement du signal de mesure est réalisé avec un ressort spiral bien câblé.

9. Système de direction (10) selon l'une quelconque des revendications 1 à 5, **caractérisé par le fait que** le prélèvement du signal de mesure se fait sans contact.

10. Système de direction (10) selon l'une quelconque des revendications 1 à 8, **caractérisé par le fait que** la fourniture de la tension d'alimentation ainsi qu'une amplification du signal de mesure se fait par un amplificateur (24) qui est intégré à un appareil de commande (22).

11. Système de direction (10) selon la revendication 9, **caractérisé par le fait que** ledit signal de mesure est fourni à l'appareil de commande (22), en fonction de l'amplification choisie, dans la gamme allant de 0V à 5V ou de 0V à 10V afin d'être mis à l'échelle conformément au couple, après une conversion analogique/numérique.

12. Système de direction (10) selon la revendication 9 ou 10, **caractérisé par le fait que** ledit amplificateur est réalisé sous forme d'un amplificateur de pont (24).
